(19) Europäisches Patentamt
European Patent Office
Office européen des brevets

(11) **EP 1 967 264 B1**

(12) **EUROPEAN PATENT SPECIFICATION**

| | |
|---|---|
| (45) Date of publication and mention of the grant of the patent:<br>**17.10.2012 Bulletin 2012/42** | (51) Int Cl.:<br>***B01J 29/76*** *(2006.01)*     ***B01D 53/94*** *(2006.01)*<br>***F01N 3/08*** *(2006.01)*     ***F01N 3/10*** *(2006.01)* |
| (21) Application number: **06833459.8** | (86) International application number:<br>**PCT/JP2006/323655** |
| (22) Date of filing: **28.11.2006** | (87) International publication number:<br>**WO 2007/074599 (05.07.2007 Gazette 2007/27)** |

(54) **DENITRIFICATION CATALYST, OPTIONALLY COATED ON A HONEYCOMB STRUCTURE CARRIER, AND METHOD OF EXHAUST GAS DENITRIFICATION WITH THE SAME**

DENITRIFIKATIONSKATALYSATOR, WAHLWEISE AUF EINER WABENSTRUKTUR GETRAGEN, UND VERFAHREN ZUR DENITRIFIKATION VON ABGASEN MIT DIESEM KATALYSATOR

CATALYSEUR DE DÉNITRIFICATION,OPTIONNELLEMENT SUPPORTÉ SUR UN SUPPORT AYANT UNE STRUCTURE EN NID D'ABEILLES ET PROCÉDÉ DE DÉNITRIFICATION DE GAZ D'ÉCHAPPEMENT UTILISANT CEUX-CI

(84) Designated Contracting States:
**DE ES FR GB IT**

(30) Priority: **26.12.2005 JP 2005371610**

(43) Date of publication of application:
**10.09.2008 Bulletin 2008/37**

(73) Proprietor: **N.E. Chemcat Corporation**
**Tokyo 105-6124 (JP)**

(72) Inventors:
• **ANDO, Ryuji**
**Numazu-shi**
**Shizuoka 410-0314 (JP)**
• **KANNO, Yasuharu**
**Numazu-shi**
**Shizuoka 410-0314 (JP)**
• **NAGATA, Makoto**
**Numazu-shi**
**Shizuoka 410-0314 (JP)**

(74) Representative: **Müller-Boré & Partner**
**Patentanwälte**
**Grafinger Straße 2**
**81671 München (DE)**

(56) References cited:
| | |
|---|---|
| EP-A1- 0 483 715 | EP-A2- 1 166 856 |
| WO-A1-00/72965 | WO-A2-02/41991 |
| WO-A2-03/022430 | JP-A- 03 270 732 |
| JP-A- 04 310 240 | JP-A- 05 212 288 |
| JP-A- 2004 536 756 | JP-A- 2005 502 451 |
| US-A- 4 378 307 | US-A- 4 426 319 |
| US-A- 5 028 406 | US-A- 5 116 586 |
| US-A- 5 733 837 | |

Remarks:
The file contains technical information submitted after the application was filed and not included in this specification

**EP 1 967 264 B1**

**Description**

BACKGROUND OF THE INVENTION

FIELD OF THE INVENTION

The present invention relates to a denitrification catalyst, a honeycomb structure type denitrification catalyst, and a method of denitrification with the same, in more detail, relates to a denitrification catalyst and a honeycomb structure type denitrification catalyst for efficiently removing nitrogen oxides through reduction from exhaust gases discharged from boilers and internal combustion engines such as a gasoline engine and a diesel engine, and a method of denitrification with the same.

DESCRIPTION OF THE PRIOR ART

Boilers and internal combustion engines discharge various hazardous substances derived from fuels and combustion air depending on their structures and types. These hazardous substances include materials such as hydrocarbons (HC), carbon monoxide (CO), nitrogen oxides ($NO_x$) and soot, and the like, that are regulated by the Air Pollution Control Law. As a purifying method thereof, a catalytic process in which exhaust gases are brought into contact with a catalyst and purified has been practically used.

In combustion apparatuses such as boilers, an optimum amount of combustion air is supplied thereto depending on the kind of fuels and feed rate of fuels to control combustion temperature so as to suppress hazardous substance generation. However, the air and fuels can not always be controlled ideally in all combustion apparatuses, and thus a large amount of hazardous substances such as nitrogen oxides are sometimes generated owing to incomplete combustion. Although it is same in the case of internal combustion engines, particularly, in the case of a diesel engine, since engine structure is designed to operate by a lean-burn, nitrogen oxides are easily discharged.

In order to purify thus discharged nitrogen oxides, catalytic reduction processes are extensively studied in which exhaust gases are mixed with ammonia or hydrocarbons etc. as a reducing agent and introduced to a purification apparatus packed with a catalyst to reduce the nitrogen oxides to $N_2$ according to the mainly following reaction formulae.

$$4NO + 4NH_3 + O_2 \rightarrow 4N_2 + 6H_2O$$

$$2NO_2 + 4NH_3 + O_2 \rightarrow 3N_2 + 6H_2O$$

$$NO + NO_2 + 2NH_3 \rightarrow 2N_2 + 3H_2O$$

However, all of the nitrogen oxides are not reduced to $N_2$, but part of the nitrogen oxides are discharged in the form of $N_2O$. This $N_2O$ is a greenhouse gas, and should be decreased as well as carbon dioxide.

Exhaust gases discharged from boilers are adjusted the temperature by heat exchanging if needed before introduced to a purification apparatus packed with a catalyst, and then mixed with a reducing agent and catalytically processed in the purification apparatus. In this case, a structure type catalyst molded a catalyst composition to pellet form is often packed in the purification apparatus. As a technique to utilize the catalytic reduction processes, a catalyst, in which Cu, Mo, Co and Mn etc. as an active metal are supported on alumina, silica-alumina, zirconia, activated carbon etc. as a catalyst, composition has been used.

In addition, using a catalyst having the zeolite containing iron and cerium, an exhaust gas purification process in which exhaust gases are added with ammonia as a reducing agent and brought into contact with the catalyst to reduce nitrogen oxides has been proposed (see patent document 1). This process has enabled stable reduction of nitrogen oxides.

On the other hand, with respect to automobiles, a method for purifying hazardous substances in the exhaust gases at a time or stepwise by arranging a catalyst suitable for the hazardous substance to be removed in the exhaust gas passage is known. For that purpose, a honeycomb structure type catalyst coated a catalyst composition on a honeycomb structure has been used. The honeycomb structure is a structure made of heat resistance materials such as metals of stainless etc. or ceramics etc., and many narrow parallel gas passages extend in the body of the structure, and a catalyst composition is coated on a part forming this gas passages. Among these honeycomb structure, one having both ends of the gas passage opened is called a flow-through type, whereas one having one end of the gas passage closed is called a wall-flow type. The wall surface in the gas passage of the wall-flow type plays a role of a filter that filters off particle composition such as soot from the exhaust gases.

Incidentally, in the case of internal combustion engines mounted on automobiles, the condition of the discharged exhaust gases is affected very much by the operating conditions of the engines. Specifically, change of running conditions of the automobiles makes the temperature and compositions of the exhaust gases unstable, which has impaired not only denitrification function of a catalyst, but also whole catalyst technology for removing other hazardous substances.

Recently, since it has been predicted that regulations of nitrogen oxides discharged from diesel cars will be enforced, denitrification catalysts that have been used or proposed so far are required to have further improved performance for removing nitrogen oxides. In such situations, a denitrification catalyst and a honeycomb structure type catalyst that can improve the ability for purifying exhaust gases and stably remove nitrogen oxides therein without increasing the amount of active metals in the catalyst composition have been desired.

Patent document 1: JP-A-2005-502451 (claim 35, claim 41)

Denitrification catalysts comprising a zeolite as a main ingredient, with supported thereon gallium or tin in addition to either iron or cerium are disclosed in US5 733 837 A1, EP 1 166 856 A2 and US 5 028 406 A1.

SUMMARY OF THE INVENTION

Considering the above-mentioned conventional problems, an object of the present invention is to provide a denitrification catalyst, a honeycomb structure type denitrification catalyst for efficiently removing nitrogen oxides through reduction from exhaust gases discharged from boilers and internal combustion engines such as a gasoline engine and a diesel engine, and a method of denitrification with the same.

After having intensively studied a way to solve these problems, the present inventors have found that in reducing nitrogen oxides in exhaust gases with ammonia or urea using a denitrification catalyst having the zeolite, on which iron element and cerium element were supported, as the main ingredient, the performance of the denitrification catalyst is greatly improved by further supporting at least one of tin element and gallium element on the zeolite and that an excellent effect especially on purification of exhaust gases discharged from a diesel engine is obtained by supporting this denitrification catalyst on a honeycomb structure carrier, and thus completed the present invention.

That is, the first aspect of the present invention is a denitrification catalyst having the zeolite as the main ingredient to be used for reducing nitrogen oxides in exhaust gases with an ammonia source, wherein, in addition to iron element and cerium element, tin element and/or gallium element is further supported on the zeolite.

In addition, the second aspect of the present invention provides the denitrification catalyst, wherein at least part of the iron element and cerium element is supported by ion exchange, in the first aspect of the present invention.

In addition, the third aspect of the present invention provides the denitrification catalyst, wherein the supported amount of the iron element is 0.1 to 10% by weight in terms of its oxide relative to the zeolite, in the first or second aspect of the present invention.

In addition, the fourth aspect of the present invention provides the denitrification catalyst, wherein the supported amount of the cerium element is 0.05 to 5% by weight in terms of its oxide relative to the zeolite, in any one of the first to third aspect of the present inventions.

In addition, the fifth aspect of the present invention provides the denitrification catalyst, wherein the zeolite is zeolite beta, in any one of the first to fourth aspect of the present inventions.

In addition, the sixth aspect of the present invention provides the denitrification catalyst, wherein the supported amount of the tin element and/or gallium element is 0.1 to 10% by weight relative to the zeolite, in any one of the first to fifth aspect of the present inventions.

On the other hand, in the seventh aspect of the present invention, the denitrification catalyst relating to the first to sixth inventions is coated on the surface of a honeycomb structure carrier.

In addition, in the eight aspect of the present invention, the coating amount of the denitrification catalyst is 20 to 300g/L relative to the honeycomb structure carrier, in the seventh aspect of the invention.

On the other hand, the ninth aspect of the present invention provides a method of denitrification relating to any one of the first to eight aspect of the invention , wherein exhaust gases containing nitrogen oxides are mixed with ammonia or urea as a reducing agent and brought into contact with the denitrification catalyst or the honeycomb structure type denitrification catalyst at a temperature range from 170 to 550°C.

The denitrification catalyst of the present invention shows high performance of purification by acting a reducing agent such as ammonia on exhaust gases containing nitrogen oxides discharged from various combustion apparatuses. In addition, an integral structure type catalyst obtained by coating this catalyst on a honeycomb structure carrier enables to treat nitrogen oxides in exhaust gases discharged especially from a diesel engine with high purifying efficiency.

Further, the catalyst of the present invention can be produced at a low cost because of small amount of use of an expensive active metal required, leading to stable production and supply of an exhaust gas purification apparatus.

BRIEF DESCRIPTION OF THE DRAWINGS

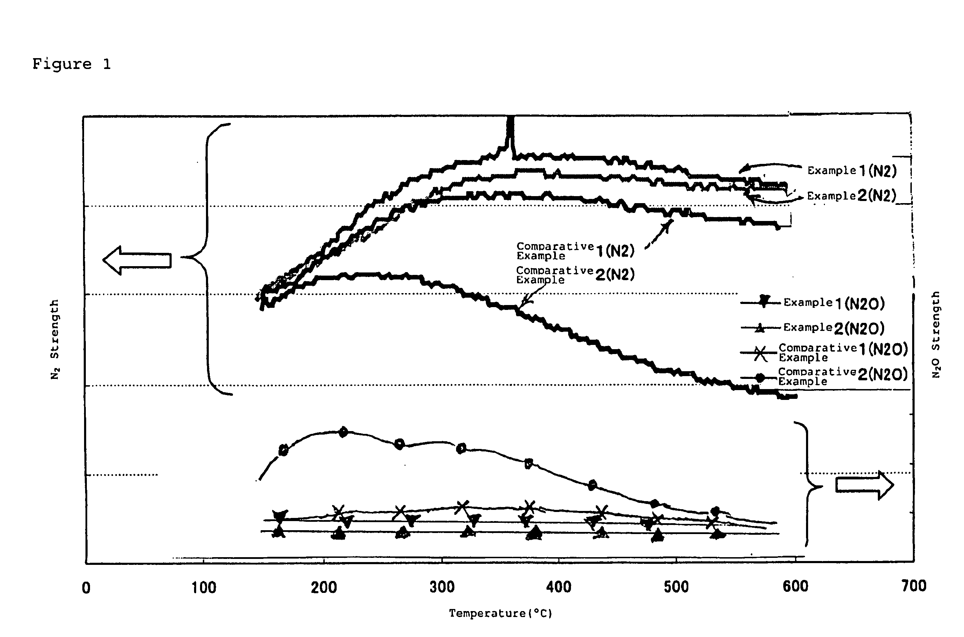

Figure 1 is a graph for contrasting the performance of the denitrification catalyst of the present invention with that of Comparative Examples.

EP 1 967 264 B1

DEATAILED DESCRIPTION OF THE INVENTION

The denitrification catalyst, the honeycomb structure type catalyst and the method of denitrification with the same of the present invention will be described below in detail. It should be noted that the present invention is not limited to use in automobiles, but is widely applicable to denitrification technologies for nitrogen oxides in exhaust gases.

1. Denitrification Catalyst

The denitrification catalyst of the present invention is a denitrification catalyst having the zeolite as the main ingredient to be used for reducing nitrogen oxides in exhaust gases with an ammonia source, wherein, in addition to iron element and cerium element, tin element and/or gallium element are further supported on the zeolite.

The denitrification catalyst of the present invention is one that the zeolite supports iron element (Fe) and cerium element (Ce), and further tin element (Sn) and/or gallium element (Ga), and promoted by these metal catalyst components. Here, Sn and Ga may be contained in the form of an oxide.

The contents of iron element and cerium element relative to the zeolite of the present invention are preferably 0.1 to 10% by weight (in terms of $Fe_2O_3$) as iron and 0.05 to 5% by weight (in terms of $CeO_2$) as cerium respectively, and more preferably 0.5 to 5% by weight (in terms of $Fe_2O_3$) as iron and 0.1 to 3% by weight (in terms of $CeO_2$) as cerium respectively. The iron element over 10% by weight causes a decrease in the number of acid sites of the zeolite leading to lower activity, and sometimes lowering in heat resistance, whereas the iron element less than 0.1% by weight brings about poorer performance to purify exhaust gases. On the other hand, the cerium element over 5% by weight causes a decrease in the number of acid sites of the zeolite leading to lower activity and lowering in heat resistance, whereas the cerium element less than 0.05% by weight lowers performance to purify exhaust gases.

In the present invention, it is preferable that at least part of iron element and cerium element exchange ions with the zeolite. The ion exchange will stabilize the skeleton structure of the zeolite and is expected to improve its heat resistance. It should be noted that all the iron element and cerium element may not always exchange ions with the zeolite and part of them may be present in the form of an oxide.

In addition, the supported amount of tin element and/or gallium element relative to the zeolite in the present invention are preferably 0.1 to 10% by weight (in terms of $SnO_2$, $GaO_2$), and more preferably 0.5 to 4% by weight. These elements over 10% by weight do not attain purification performance that corresponds with added amount, whereas these elements less than 0.1% by weight lower purification performance of exhaust gases.

The metal catalyst component is not particularly limited as long as the component contains iron element and cerium element having activity in purifying nitrogen oxides in exhaust gases and further tin element and/or gallium element. And, the component may include other transition metals, rare-earth metals, and noble metals and the like. Specifically, a transition metal such as nickel, cobalt, zirconium and copper etc., a rare-earth metal such as lanthanum, praseodymium and neodymium etc. and a noble metal such as gold, silver, platinum, palladium and rhodium etc. are included. However, the supported amount of a noble metal such as platinum relative to the zeolite is preferably 0.1% by weight (in terms of an oxide) or less because of its high activity for oxidizing ammonia.

On the other hand, the zeolite for use in the present invention is not particularly limited as long as it can support an active metal, but is preferably thermally stabilized zeolite. For example, various different types of the zeolite such as a beta-type, A-type, X-type, Y-type, pentasil type (ZSM-5) and MOR-type can be used, but especially thermally stabilized zeolite beta is preferably used. The thermally stabilized zeolite in this connection means the zeolite having characteristics of suppressed dealumination (falling out of aluminum) therefrom under a hydrothermal condition. In particular, zeolite beta, which is treated so as to provide a nonskeleton aluminium oxide chain connected with a zeolite skeleton and is ion exchangeable with iron element and cerium element, is preferable in the present invention. Such zeolite beta has improved hydrothermal stability and a broad temperature range of activity, which lead to excellent denitrification performance when an aqueous solution of $NH_3$ or the like is used as a reducing agent.

Zeolite beta has a unit cell composition represented by the following average composition formula and is classified as synthetic zeolite having a tetragonal system.

$$M_{m/x}[Al_mSi_{(64-m)}O_{128}] \cdot pH_2O$$

(wherein, M indicates a cation; x indicates a valence of the M; m indicates a number between 0 and 64; and p indicates a number of 0 or more)

And generally, zeolite beta has a comparatively complicated three-dimensional pore structure composed of straight pores having a comparatively large pore diameter that is aligned in one direction and curved pores that cross the straight pores, and allows a cation in ion exchange and a gas molecule such as ammonia etc. to diffuse easily. Zeolite beta has such a peculiar structure, whereas mordenite, faujasite and the like have only straight pores aligned in one direction. With such a complicated pore structure, zeolite beta has a structure hardly damaged and high stability.

4

Zeolite material having such compositions has both of improved resistance at an elevated temperature and high activity at a low temperature in denitrification reaction using $NH_3$ or the like as a reducing agent and suppresses $N_2O$ generation at the same time, showing excellent purifying performance of nitrogen oxides in exhaust gases. The reason why zeolite material has such performance in the present invention is not clear, but it is considered that the zeolite having its dinitrification performance improved by being supported by iron and cerium and further promoted by Sn or Ga will increase a reaction rate of $NH_3$ and $NO_x$, acquire improved performance of decomposing nitrogen oxides and suppress $N_2O$ generation.

The denitrification catalyst of the present invention is used preferably as a structure type catalyst that the above catalyst components is coated on the surface of a carrier. The shape of the carrier is not particularly limited, and may be selected from the shapes of a cylindrical column, cylinder, sphere, honeycomb, sheet and the like. The size of a structure type carrier is not particularly limited. The carrier having a diameter of a few millimeters to a few centimeters can be used in the case of a cylindrical column, cylinder or sphere.

2. Production of Denitrification Catalyst

The denitrification catalyst of the present invention is produced by (1) preparing the zeolite, on which iron element and cerium element are supported, for reducing nitrogen oxides in exhaust gases with ammonia or urea, and then (2) supporting tin element and/or gallium element on this zeolite.

As for the zeolite supporting iron element and cerium element, the iron element and the cerium element may be supported on the zeolite, and any supporting method such as ion exchange and impregnation may be accepted. Various grades of the zeolite promoted by iron element and cerium element in the present invention are available from major producers of the zeolite. Alternatively, these can be produced by the procedures described in JP-A-2004-536756.

The method for obtaining ion-exchanged zeolite is not particularly limited. An ordinary method for ion exchange of treating the zeolite with an aqueous solution of an iron-containing compound (for example, ferric nitrate) and an aqueous solution of a cerium-containing compound (for example, cerium nitrate) may be applied. The raw material for metal catalyst components is usually used as an aqueous solution of a nitrate, sulfate, carbonate, acetate or the like.

In the present invention, when the zeolite is zeolite beta and iron element and cerium element are one by ion exchange, the ratio of ion exchange is represented by following expression (1), based on that one of the iron element and the cerium element and three of the above $[AlO_{4/2}]^-$ unit, which is a monovalent ion-exchange site in the zeolite, form an ion pair.

$$[\text{number of moles of iron ion and cerium ion contained by ion exchange in the zeolite of a unit weight} / \{(\text{number of moles of } Al_2O_3 \text{ in the zeolite of a unit weight}) \times (2/3)\}] \times 100 \quad \cdots\cdots\cdots(1)$$

In addition, the ratio of ion exchange is preferably 10 to 100%, more preferably 12 to 92% and most preferably 15 to 80%. The ratio of ion exchange of 92% or less, preferably 80% or less gives excellent denitrification performance. The reason why the denitrification performance is excellent is not clear, but it is considered that skeleton structure of the zeolite becomes more stable, and the heat resistance of the catalyst, consequently, the lifetime of the catalyst is improved and more stable catalyst activity is obtained. The too low ratio of ion exchange, however, sometimes gives insufficient denitrification performance. Incidentally, the ratio of ion exchange of 100 % means that all the cations in the zeolite are ion exchanged by iron ions and cerium ions.

Here, the ratio of iron ions versus cerium ions to be ion-exchanged is preferably Fe/Ce = 0.5 to 30, more preferably Fe/Ce = 1 to 20 by weight in terms of oxides.

The zeolite, on which iron element and cerium element are supported, is promoted by further tin element and/or gallium element. The means for such promotion is not limited, but an aqueous solution of a salt of tin and/or gallium may be mixed with the zeolite, and then heated as needed. Such salt of tin and/or gallium includes tin sulfate, tin chloride, gallium nitrate and gallium chloride and the like, and may be blended as an oxide of these elements. Such tin element and the gallium element may be supported as oxides such as $SnO_2$ and $Ga_2O_3$, and may be partly ion-exchanged with the zeolite.

In the present invention, it is preferable that tin element is supported on the zeolite, on which iron element and cerium element are supported. A raw material of tin element can be obtained at a lower cost than that of gallium element leading to an inexpensive catalyst material with excellent denitrification performance. In the case that tin element is supported on the zeolite, on which iron element and cerium element are supported, the amount of the tin element relative to the zeolite is preferably 0.1 to 10% by weight, more preferably 0.5 to 4% by weight in terms of $SnO_2$.

Incidentally, the calcination condition is not particularly limited as long as it is sufficient to obtain the zeolite material, on which metal catalyst components are stably supported. The calcination temperature is preferably 300 to 700°C, more preferably 400 to 600°C. Heating means can be conducted by a known heating means such as an electric furnace and a gas furnace and the like.

The denitrification catalyst of the present invention may be used by mixing with other catalyst materials such as an OSC, a solid acid or a binder that do not impair the characteristics of the zeolite. The OSC includes cerium, a complex oxide of cerium and a transition metal such as zirconium etc. , a complex oxide of cerium and aluminum and a complex oxide of cerium and a rare-earth element such as lanthanum, praseodymium, samarium, gadolinium and neodymium and the like. The solid acid includes $TiO_2$, $WO_3/Zr$, $WO_3/Ti$, $SO_3/Zr$ and a metallosilicate. In addition, the binder includes alumina, silica sol and silica alumina.

3. Honeycomb Structure Type Denitrification Catalyst

The honeycomb structure type denitrification catalyst of the present invention is formed by coating the above denitrification catalyst on the surface of a honeycomb structure carrier.

That is, an integral structure type denitrification catalyst is constituted by coating the above denitrification catalyst having the above zeolite as the main ingredient on a monolithic honeycomb structure made of a heat-resistant material such as stainless steel and ceramics in order to apply the denitrification catalyst of the present invention to purification of exhaust gases discharged from automobiles.

Here, the integral structure type carrier is not particularly limited, but may be selected from known integral structure type carriers. Such integral structure type carrier includes a flow-through type carrier and a wall-flow type carrier to be used for a DPF, which material is made of metal or ceramics. In addition, a sheet type structure knitted with thin fibrous material and a felt-like incombustible structure made of comparatively thick fibrous material can be used. These integral structure type carriers have a big supported amount of metal catalyst components and have a large contact area with exhaust gases, and thus have a larger processing capacity compared with other structure type carriers.

The entire shape of an integral structure type carrier is optional and may be appropriately selected from a cylindrical column, a quadrangular column, a hexagonal column and the like depending on a structure of an exhaust gas system to be applied. The proper number of holes in the opening is determined considering the kind, flow rate and pressure drop of the exhaust gas to be processed or the efficiency of removal, and normally is roughly 10 to 1,500 per square inch as purification use for exhaust gases for automobiles.

In such a honeycomb shape carrier such as a flow-through type carrier and a wall-flow type carrier, the structural characteristics are shown in cell density. A carrier having a cell density of 10 to 1,500 cells/square inch, preferably 100 to 900 cells/square inch can be used in the present invention. A cell density of 10 cells /square inch or more can secure a sufficient contact area between an exhaust gas and a catalyst and thereby can provide the satisfactory performance for purifying the exhaust gas. On the other hand, a cell density of 1,500 cells /square inch or less does not cause a serious pressure loss of exhaust gas and thus does not damage the performance of an internal combustion engine.

Incidentally, a catalyst, in which a catalyst composition is coated on an integral structure type carrier such as a flow-through type carrier and a wall-flow type carrier, may be referred to as an integral structure type catalyst hereinafter in the present invention.

In addition, a honeycomb structure has a cell density of preferably 100 to 900 cells/square inch, more preferably 200 to 600 cells/ square inch. A honeycomb structure having a cell density more than 900 cells/square inch tends to cause clogging of deposited PM, whereas one having a cell density less than 100 cells/square inch provides a small geometric surface area resulting in lower effective usage rate of the catalyst.

In addition, it is preferable that the coating amount of a denitrification catalyst having the zeolite as the main ingredient is 20 to 300 g/L, particularly 50 to 200 g/L relative to the integral structure type carrier. The coating amount more than 300 g/L causes a high production cost, whereas the coating amount less than 20 g/L lowers purifying performance for exhaust gases.

The honeycomb structure to be used here may be made of a ceramic material such as alumina and cordierite etc. as well as a metal material such as stainless steel etc.

The integral structure type catalyst of the present invention is produced by mixing a dinitrification catalyst having the zeolite as the main ingredient, an aqueous medium and a binder if needed to obtain a slurry mixture and then coating it on an integral structure type carrier followed by drying and calcination.

That is, firstly a dinitrification catalyst having the zeolite as the main ingredient is mixed with an aqueous medium at a predetermined ratio to obtain a slurry mixture. In the present invention, the aqueous medium may be used in such an amount as to uniformly disperse a denitrification catalyst having the zeolite as the main ingredient in the slurry.

In this time, an acid or an alkali for pH adjustment, a surfactant for adjusting viscosity and improving dispersion of the slurry and a resin for dispersion may be blended. A grinding and mixing process using a ball mill can be used for mixing the slurry, but the other grinding or mixing process may also be used.

Next, the slurry mixture is coated on the integral structure type carrier. The method for coating is not particularly limited, but a washcoat method is preferable. An integral structure type catalyst, on which catalyst compositions are supported, is obtained by drying and calcination after coating. Meanwhile, the drying temperature is preferably 100 to 300°C, more preferably 100 to 200°C. In addition, the calcination temperature is preferably 300 to 700°C, particularly 400 to 600°C. A known heating means such as an electric furnace and a gas furnace can be used.

4. Method of Denitrification

The method of denitrification of the present invention is characterized by mixing exhaust gases containing nitrogen oxides with an ammonia source as a reducing agent and bringing the exhaust gases into contact with the above denitrification catalyst or honeycomb structure type denitrification catalyst at the temperature range from 170 to 550°C.

As an ammonia source, a solid compound at an ordinary temperature such as ammonium carbonate, urea, cyanuric acid and melamine etc., which generate ammonia by decomposition, can be used besides ammonia. These solid compounds are preferable because they are handled more easily compared with ammonia and free of safety problems such as leakage etc. Among these, urea is most practical because it is readily available and is not designated as a pollutional material.

The form in use of these ammonia sources is not particularly limited. Ammonia or urea can be used. Ammonia is usually used in the form of an aqueous solution, whereas a solid compound such as urea may be mixed as it is with exhaust gases and brought into contact with a denitrification catalyst or be dissolved in water and decomposed to generate ammonia, which is then brought into contact with a denitrification catalyst.

An exhaust gas from a boiler is adjusted its temperature of the exhaust gas by heat exchange if needed and is mixed with a reducing agent before introduced to a purification apparatus packed with a catalyst, and then subjected to catalytic processing in the purification apparatus. In this case, a structure type catalyst molded a catalyst composition to pellet form is often packed in the purification apparatus.

Next, an example of a process for treating exhaust gases from a diesel engine by an SCR method in which the catalyst of the present invention is appropriately used and urea is used as an ammonia source will be described below. SCR stands for "Selective Catalytic Reduction" and also is called selective catalytic reduction method and has drawn attention as a denitrification catalyst technology for a lean-burn engine such as a diesel engine. The denitrification catalyst of the present invention is used as an SCR catalyst.

When the present invention is used for purifying exhaust gases from a diesel engine, it is preferable that a first oxidation catalyst and an SCR catalyst relating to the present invention is allocated in an exhaust gas pipeline. A urea water supply unit is controlled by an engine control unit based on a predetermined program and urea water is pumped via a supply pipe to a nozzle installed in the exhaust gas pipeline and sprayed. The sprayed urea water is mixed with high-temperature exhaust gases and hydrolyzed, or brought into contact with a urea-decomposing catalyst to generate ammonia, which reduces $NO_x$ in the exhaust gases with the function of the SCR catalyst. The first oxidation catalyst has the function of converting NO in the exhaust gases to $NO_2$ to adjust the $NO/NO_2$ ratio in the exhaust gases supplied to the SCR catalyst and also decomposing soluble organic fractions (SOF) by oxidation. In addition, a second oxidation catalyst may be allocated at the latter stage of the SCR catalyst relating to the present invention. The second oxidation catalyst has mainly the function of oxidizing unreacted ammonia.

The method of denitrification of the present invention is a method for purifying nitrogen oxides in exhaust gases by bringing $NH_3$ or the like as a reducing agent and the exhaust gases containing the nitrogen oxides into contact with the above denitrification catalyst to reduce $NO_x$ in the exhaust gases and also to suppress $N_2O$ generation by reducing it. Excellent denitrification performance is attained at an elevated temperature of exhaust gases of 170 to 550°C, preferably 200 to 500°C and more preferably 350 to 400°C.

Conventionally, in a method of denitrification using $NH_3$ or the like, a phenomenon (ammonia slip), wherein $NH_3$ or the like not utilized for reductive reaction of nitrogen oxides in exhaust gases is discharged in the form of $NH_3$, has often posed a problem. $NH_3$ is a controlled substance and its discharge leads to cause another pollution. The method of denitrification of the present invention can prevent such ammonia slip, wherein $NO_x$ and $N_2O$ can be subjected to reductive reaction efficiently with $NH_3$ etc. as a reducing agent.

EXAMPLES

Examples and comparative examples of the present invention will be shown hereinafter, however, the present invention is not limited thereto.

Example 1

<Fe-Ce-Sn zeolite>

Firstly, the zeolite, on which iron element and cerium element were supported, was produced as follows according to JP-A-2004-536756.

100 g of $NH_4$-zeolite beta was dispersed in 1 L of a cerium nitrate solution having a concentration of 0.05 moles and stirred for 24 hours followed by filtration and washing with 2,000 ml of deionized water.

The resultant filter cake was added to 1 L of a $FeCl_2$ solution having a concentration of 0.05 moles and stirred for 24 hours followed by drying. Thus obtained material was then washed with 2,000 ml of deionized water, dried and calcined at 600°C for 6 hours. The concentrations of iron element and cerium element in the raw material zeolite were $CeO_2$:0.15% by weight and $Fe_2O_3$:1.0% by weight in terms of oxides, the ion exchange ratio was 60% and 20% respectively.

Secondly, thus obtained zeolite supporting iron element and cerium element was impregnated with an aqueous solution of tin chloride so as to be a concentration of 1% by weight based on Sn element, dried and calcined at 450°C for an hour in an electric furnace to obtain a catalyst having the zeolite as the main ingredient of the present invention.

<Denitrification performance>

Thus obtained catalyst having the zeolite as the main ingredient was subjected to aging at 800°C for 5 hours under an atmosphere of 10% $H_2O$/air in a test furnace for hydrothermal durability.

The reduction performance of 50 mg of the aged catalyst having the zeolite as the main ingredient was measured with a temperature programmed reduction (TPR) apparatus (TPD-Type R made by Rigaku Corporation) using $NH_3$. The measurement conditions are as follows.

<Measurement conditions>

Heat treatment: Heat treatment was conducted at 600°C for 20 minutes to remove various compounds containing water, which is adsorbed species.

Atmosphere: helium

Reducing gas composition: ammonia (2,000 ppm), NO (2,000 ppm), $H_2O$ (3%), $O_2$ (10%), He (the balance).

Cooling down rate: -10°C/min

Temperature range for measurement: cooled down from 600°C to 150°C.

The $N_2$ behavior under the above conditions was measured by mass spectrum. The intensity changes are shown in Figure 1 (upper figure).

In addition, similar measurement was conducted changing the reducing gas composition to ammonia (2,000 ppm), $N_2O$ (2, 000 ppm), $H_2O$ (3%), $O_2$ (10%) and He (the balance). The $N_2O$ behavior under the above conditions was measured by mass spectrum. The intensity changes are shown in Figure 1 (lower figure).

Example 2

A catalyst having the zeolite, on which iron element, cerium element and further gallium element were supported, as the main ingredient was obtained by a similar procedure except that gallium nitrate was used instead of tin chloride of Example 1. Thus obtained catalyst was impregnated so as to be a concentration of 1% by weight based on Ga element, dried and then calcined at 450°C for an hour in an electric furnace.

Comparative Example 1

Zeolite beta promoted by iron element and cerium element that was used in Example 1 was used as it is as a catalyst for comparison, without supporting additional Sn element.

Comparative Example 2

Zeolite beta promoted by iron element and cerium element that was used in Example 1 was used as a catalyst for comparison, with further supporting additional platinum element. Thus obtained catalyst was impregnated so as to be a concentration of 1% by weight based on Pt element, dried and then calcined at 450°C for an hour in an electric furnace.

From the results shown in Figure 1, it can be understood that the catalysts having the zeolite of Example 1 and Example 2 as the main ingredient generate more amount of $N_2$ than the catalyst having the zeolite of Comparative Example 1 as the main ingredient. In addition, generation of $N_2O$ is seen in the range from 300°C to 400°C in Comparative Example 2, while no generation of $N_2O$ is seen at all for the catalyst having the zeolite of Examples 1 and 2 as the main ingredient. From these results, it can be understood that addition of tin element or gallium element improves the performance of the denitrification reaction by $NH_3$ in the catalyst having the zeolite as the main ingredient. In addition, more effects are obtained for the catalyst having the zeolite promoted by especially tin element as the main ingredient.

From these results, it can be understood that the catalyst having the zeolite as the main ingredient of the present invention performs an excellent function as a catalyst material of denitrification using $NH_3$ or the like as a reducing agent and also performs an excellent function when used as a denitrification catalyst for purifying exhaust gases from a diesel engine or the like.

## Claims

1. A denitrification catalyst having a zeolite as the main ingredient to be used for reducing nitrogen oxides in exhaust gases using an ammonia source, wherein tin element and/or gallium element in addition to iron element and cerium element are supported on the zeolite.

2. The denitrification catalyst according to claim 1, wherein at least part of the iron element and cerium element is supported by ion exchange.

3. The denitrification catalyst according to claim 1 or 2, wherein the supported amount of the iron element is 0.1 to 10% by weight in terms of oxide relative to the zeolite.

4. The denitrification catalyst according to any one of claims 1 to 3, wherein the supported amount of the cerium element is 0.05 to 5% by weight in terms of oxide relative to the zeolite.

5. The denitrification catalyst according to any one of claims 1 to 4, wherein the zeolite is zeolite beta.

6. The denitrification catalyst according to any one of claims 1 to 5, wherein the supported amount of the tin element and/or gallium element is 0.1 to 10% by weight relative to the zeolite.

7. The denitrification catalyst according to any one of claims 1 to 6 coated on the surface of a honeycomb structure carrier.

8. The denitrification catalyst according to claim 7, wherein the coating amount of the denitrification catalyst is 20 to 300g/L relative to the honeycomb structure carrier.

9. A method of denitrification wherein exhaust gases containing nitrogen oxides are mixed with an ammonia source as a reducing agent and brought into contact with the denitrification catalyst according to any one of claims 1 to 8 at a temperature range from 170 to 550°C.

## Patentansprüche

1. Entstickungskatalysator mit einem Zeolith als Hauptbestandteil, der zur Reduktion von Stickstoffoxiden in Abgasen unter Verwendung einer Ammoniakquelle eingesetzt wird, wobei das Element Zinn und/oder das Element Gallium zusätzlich zu dem Element Eisen und dem Element Cer auf dem Zeolith geträgert ist oder sind.

2. Entstickungskatalysator nach Anspruch 1, bei dem mindestens ein Teil des Elements Eisen und des Elements Cer mittels Ionenaustausch geträgert worden ist.

3.  Entstickungskatalysator nach Anspruch 1 oder 2, bei dem die geträgerte Menge des Elements Eisen 0,1 bis 10 Gewichtsprozent, bezogen auf das Oxid, auf der Basis des Zeoliths beträgt.

4.  Entstickungskatalysator nach einem der Ansprüche 1 bis 3, bei dem die geträgerte Menge des Elements Cer 0,05 bis 5 Gewichtsprozent, bezogen auf das Oxid, auf der Basis des Zeoliths beträgt.

5.  Entstickungskatalysator nach einem der Ansprüche 1 bis 4, bei dem der Zeolith Zeolith beta ist.

6.  Entstickungskatalysator nach einem der Ansprüche 1 bis 5, bei dem die geträgerte Menge des Elements Zinn und/ oder des Elements Gallium 0,1 bis 10 Gewichtsprozent auf der Basis des Zeoliths beträgt.

7.  Entstickungskatalysator nach einem der Ansprüche 1 bis 6, der auf der Oberfläche eines Trägers mit Wabenstruktur aufgebracht ist.

8.  Entstickungskatalysator nach Anspruch 7, wobei die Beschichtungsmenge des Entstickungskatalysators 20 bis 300 g/Liter auf der Basis des Trägers mit Wabenstruktur beträgt.

9.  Entstickungsverfahren, bei dem Abgase, die Stickstoffoxide enthalten, mit einer Ammoniakquelle als Reduktionsmittel gemischt werden und mit dem Entstickungskatalysator nach einem der Ansprüche 1 bis 8 in einem Temperaturbereich von 170 bis 550 °C in Kontakt gebracht werden.


**Revendications**

1.  Catalyseur de dénitrification comportant une zéolite en tant qu'ingrédient principal destiné à être utilisé pour réduire les oxydes d'azote dans des gaz d'échappement à l'aide d'une source d'ammoniac, dans lequel l'élément étain et/ou l'élément gallium en plus d'un élément fer et d'un élément cérium sont supportés sur la zéolite.

2.  Catalyseur de dénitrification selon la revendication 1, dans lequel au moins une partie de l'élément fer et de l'élément cérium est supportée par échange d'ions.

3.  Catalyseur de dénitrification selon la revendication 1 ou 2, dans lequel la quantité supportée de l'élément fer est de 0,1 à 10 % en poids en termes d'oxyde par rapport à la zéolite.

4.  Catalyseur de dénitrification selon l'une quelconque des revendications 1 à 3, dans lequel la quantité supportée de l'élément cérium est de 0,05 à 5 % en poids en termes d'oxyde par rapport à la zéolite.

5.  Catalyseur de dénitrification selon l'une quelconque des revendications 1 à 4, dans lequel la zéolite est la zéolite bêta.

6.  Catalyseur de dénitrification selon l'une quelconque des revendications 1 à 5, dans lequel la quantité supportée de l'élément étain et/ou de l'élément gallium est de 0,1 à 10 % en poids par rapport à la zéolite.

7.  Catalyseur de dénitrification selon l'une quelconque des revendications 1 à 6, revêtu sur la surface d'un support de structure en nid-d'abeilles.

8.  Catalyseur de dénitrification selon la revendication 7, dans lequel la quantité de revêtement du catalyseur de dénitrification est de 20 à 300 g/L par rapport au support de structure en nid-d'abeilles.

9.  Procédé de dénitrification, dans lequel des gaz d'échappement contenant des oxydes d'azote sont mélangés avec une source d'ammoniac en tant qu'agent réducteur et amenés en contact avec le catalyseur de dénitrification selon l'une quelconque des revendications 1 à 8, à une gamme de températures de 170 à 550 °C.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005502451 A
- US 5733837 A1
- EP 1166856 A2
- US 5028406 A1
- JP 2004536756 A